# EUROPEAN PATENT APPLICATION

(11) **EP 3 865 835 A1**
(43) Date of publication of application: **18.08.2021**
(21) Application number: 21157001.5
(22) Date of filing: 13.02.2021
(51) Int. Cl.: G01J 1/02, G01J 1/08, G01J 1/42, G01J 1/44

(54) **A SYSTEM FOR MEASURING LIGHTING, IN PARTICULAR ROAD LIGHTING**

(30) Priority: 17.02.2020 PL 43292820
(71) Applicant: GL OPTIC POLSKA Sp. z o.o. Sp. k., 62-040 Puszczykowo (PL)
(72) Inventor: DYLAK, Jacek, 60-461 Poznan (PL); LALEK, Jan, 62-040 Puszczykowo (PL); PRZYBYLA, Mikolaj, 62-002 Zlotkowo (PL)
(74) Representative: Gornicki, Pawel

(57) **Abstract**

A system for measuring lighting, in particular road lighting, comprising a matrix luminance meter (1) and measurement area markers (2) positioned on the measurement area boundary (3), characterized in that it comprises at least four measurement area (3) markers (2), sending a light signal to the luminance meter (1), which during the luminance measurement is registered in the luminance image and marks the measurement area in this image, and each marker (2) comprises a flat housing (6) with a light source (8), an optical system (9) forming a light beam and a power source (10) in such a way that the light source (8) and the optical system (9) forming the light beam are located in the upper part of the housing (6), with light transmissible side walls.

## Description

The subject of the invention is a system for measuring lighting of large areas, especially road lighting.

The solution according to the invention is intended for measuring lighting of large areas, especially of a roadway, but also of a sports field and the like.

In the case of measuring road lighting, the luminance of the surface is measured at a distance of 60 meters in a rectangle between two consecutive lighting poles. The distances between the poles can range from about 30 meters to even 100 meters, and the width of the road can vary from about 7 meters to 12 meters.

Until recently, road lighting was measured using a spot luminance meter. Measuring lighting of a large area using this method is tedious, with a high risk of making a mistake during the measurement and is characterized by low repeatability. With the adoption of the CCD and CMOS matrix sensor technology, matrix meters began to be used to measure the luminance of road lighting. Performing one measurement with a matrix meter allows you to simultaneously determine the luminance value at many points in the measurement area. The condition is to mark on the obtained image the measurement points, located in a specific measurement area, meeting the requirements of the normative documents regulating the principles of measuring road lighting. Marking the measurement area in the recorded luminance image requires the use of measurement area markers, due to the small amount of light emitted by the road surface and the low contrast of the image. The luminance value of the road surface is in the order of a few candela per square metre. Determining the measurement area in the luminance image without the use of markers is associated with a high risk of error.

In the known methods of measuring road lighting with matrix luminance meters, various passive markers in the form of white horizontal or vertical elements are used to define the measurement area, and the supplier of the measuring equipment does not provide the markers to the user. The user of the measuring device must independently prepare the markers for the measurement area, and then manually mark the measurement area in the image recorded with the matrix meter. Due to this a measurement takes more time, uncertainty is introduced and there is no repeatability of marking the measurement area. In addition, passive markers in the form of white vertical or horizontal elements stand out poorly in the luminance image, recorded in low light conditions, which makes determining their position in the image not precise. According to the standard defining the principles of road lighting measurement, the measurement area is determined between two consecutive lighting poles, however, the use of lighting poles as measuring area markers does not allow for precise determination of this area in the image of the matrix luminance meter. This is due to the fact that the lighting poles are at a distance from the edge of the roadway. The use of vertical markers of significant height may also cause additional error in the assessment of the measurement area, resulting from the significant effect of perspective shortening. Chinese patent CN105628194 B discloses a method for dynamically measuring road lighting using a vertical passive marker and a matrix luminance meter, but the marker is positioned outside the measurement area and is used to determine the position of the measuring device where the continuous luminance measurement begins and ends.

Attempts to use signalling lights or other commonly available light sources as measurement area markers did not bring the expected results. Due to the high intensity of the light emitted by them and the usually large luminous field, the matrix luminance meter image pixels are blown out in the vicinity of the marker, thus preventing the precise determination of the marker position on the recorded image.

The aim of the solution according to the invention was to develop a luminance measurement system, especially for measuring road lighting, comprising a matrix luminance meter and active measurement area markers, which transmit a signal to the measuring device, which enables to determine the measurement area in the luminance image recorded by the matrix meter.

A luminance measuring system, in particular road lighting, comprising a matrix luminance meter and measurement area markers positioned on the measurement area boundary, characterized in that it comprises at least four measurement area markers, sending a light signal to the luminance meter, which during the luminance measurement is registered in the luminance image and marks the measurement area in this image, and each marker comprises a flat housing with a light source, an optical system forming a light beam and a power source in such a way that the light source and the optical system forming the light beam are located in the upper part of the housing, with light transmissible side walls.

It is preferred that the luminance of the marker light source exceeds the luminance of the other elements of the measurement area, which allows the unambiguous identification of the marker in the image from the luminance meter.

Preferably, the light source in the marker is an LED.

Preferably, the light source in the marker has a directional pattern in a horizontal plane to increase the efficiency of the light.

Preferably, the light source in the marker has an omnidirectional pattern in the horizontal plane in order to make the detectability of the marker independent of its positioning.

Preferably, the light source in the marker has a directional characteristic in a vertical plane.

Preferably, the marker's power source is a battery or rechargeable battery.

Preferably, the marker has a manual or automatic power switch, and the automatic power switch activates the marker immediately upon removal from the carrying box and deactivates it when it is placed back in the carrying box.

Preferably, the marker housing is made of dark PVC , anodized aluminium, or some other weatherproof material.

Preferably, the marker positions recorded in the image from the luminance meter can be linked manually in the software to define a measurement area.

Preferably, the points created by the markers in the image from the luminance meter can be linked automatically by the software to define a measurement area.

The solution according to the invention has, above all, the advantage that the user, in addition to the image luminance meter, receives a complete set of accessories necessary to perform the measurement. The measurement area marker light source is placed at a low height, which reduces the positioning error due to the perspective distortion. In addition, the factory adjustment of the markers' brightness to the meter characteristics ensures excellent visibility of the markers both during the measurement and in the recorded image from the luminance meter. This enables the precise location of the marker position in the recorded image, and thus the correct determination of the measurement area. The small size of the light source image in the recorded image also has a beneficial effect on the precision of locating the marker image in the image of the matrix luminance meter. The small dimensions of the markers according to the invention facilitate transport to and from the measurement site. The capability of the software to automatically determine the measurement area without the need for user involvement, facilitates the operation of the meter and significantly reduces the time of measurement.

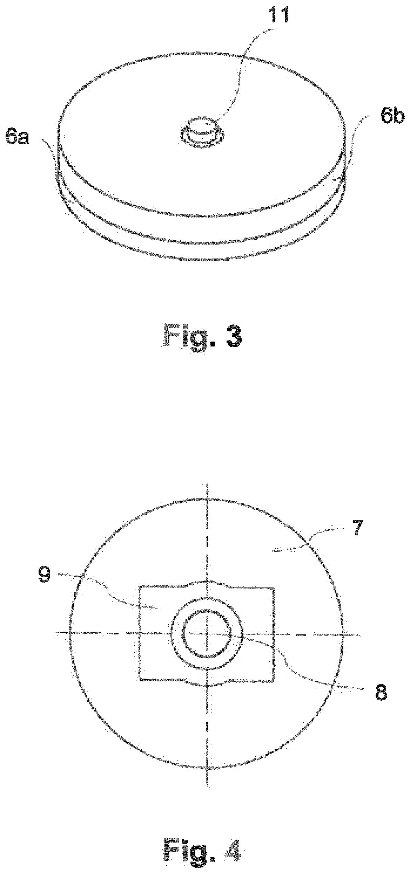

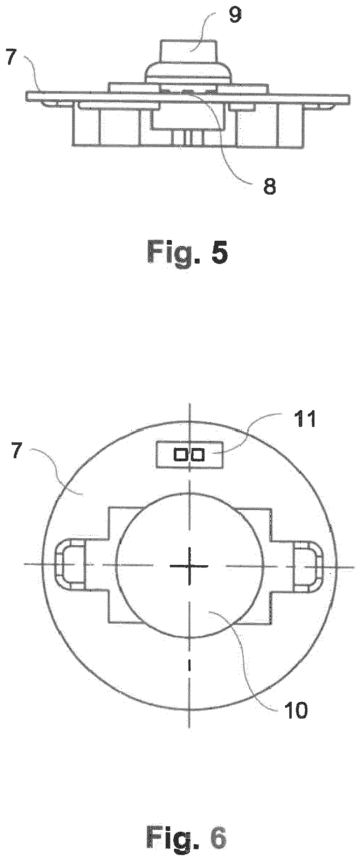

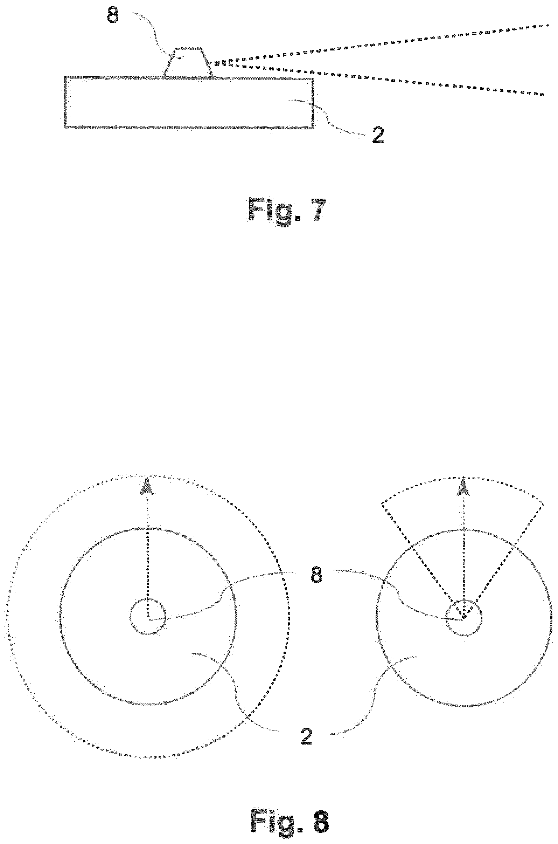

The subject of the invention will be explained in more detail in the example of the illustration, in which fig. 1 shows a schematic view of the luminance measuring system during the measurement, fig. 2 shows the measurement area marker positions as viewed from the position of the luminance meter, fig. 3 shows a perspective view of the measurement area marker, fig. 4 shows the top view of the PCB , fig. 5 shows a cross-sectional view of the top of the measurement area marker along the AA line, fig. 6 shows the bottom view of the PCB , fig. 7 shows a cross-sectional view of the measurement area marker with the light beam angle marked in the vertical axis, and fig. 8 shows the top view of the measurement area marker with the light beam angles marked in the horizontal plane.

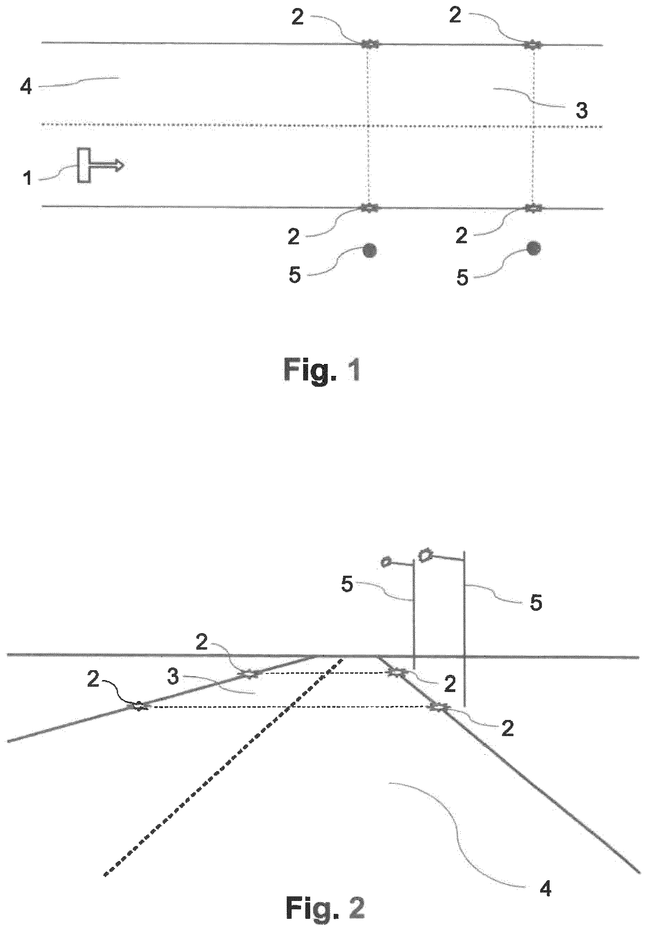

The luminance measurement system, especially road lighting, comprises a matrix luminance meter **1** and markers **2** of the measurement area **3,** located on the boundary of this area. As shown in fig. **1****,** the markers **2** have been positioned at the corners of the rectangular measurement area **3,** at the edges of the road surface **4,** at the height of the adjacent lighting poles **5,** in such a way as to be clearly visible from the measurement position. Markers **2** of the measurement area transmit light signals to the luminance meter **1,** which are recorded in the luminance image during the measurement. By combining these points corresponding to the light signals emitted by the markers **2** in the recorded image, a measurement area in this image is determined. The measurement area in the image from the luminance meter **1** is determined manually or automatically in the meter software. Each marker **2** consists of a flat, cylindrical, two-part housing **6** containing an LED as a light source **8,** an optical system **9** forming a light beam, a power source **10** and a switch **11.** The lower part of the housing **6** forms the base **6a** of the marker **2,** while the upper part constitutes its cover **6b.** The base **6a** and the cover **6b** of the housing **6** are connected in a way that ensures tightness and resistance to adverse weather conditions. There is a cylindrical bulge **12** in the central part of the cover and its side walls transmit light. Inside the cylindrical bulge **12** of the cover **6b** there is a PCB **7** with an LED mounted on its upper surface, which constitutes the light source **8** and the optical system **9** forming the light beam. The luminance of the light source **8** exceeds the luminance of the other elements of the measurement area, which allows the unambiguous identification of the marker **2** in the image from the luminance meter **1.** Mounted on the lower surface of the PCB **7** is a battery which is a power source **10** for the electronic circuit and a power switch **11.** When performing the measurement of road lighting, the markers 2 are removed from the carrying box, the light source 8 is turned on using the switch 11 and placed in the corners of the measurement area so that they are clearly visible from the position of the luminance meter **1.** In the case of markers **2** with an automatic switch **11,** the marker is activated when it is taken out of the carrying box and deactivates when it is placed back in the carrying box.

## Claims

1. A system for measuring lighting, in particular road lighting, comprising a matrix luminance meter and measurement area markers positioned on the measurement area boundary, **characterized in that** it comprises at least four measurement area (3) markers (2), sending a light signal to the luminance meter (1), which during the luminance measurement is registered in the luminance image and marks the measurement area in this image, and each marker (2) comprises a flat housing (6) with a light source (8), an optical system (9) forming a light beam and a power source (10) in such a way that the light source (8) and the optical system (9) forming the light beam are located in the upper part of the housing (6), with light transmissible side walls.

2. A system for measuring lighting according to claim 1, **characterized in that** the luminance of the light source of the marker (2) exceeds the luminance of other elements of the measurement area (3).

3. A system for measuring lighting according to claim 1, **characterized in that** the light source (8) in the marker (2) is an LED.

4. A system for measuring lighting according to claim 1, **characterized in that** the light source (8) in the marker (2) has a directional characteristic in a horizontal plane.

5. A system for measuring lighting according to claim 1, **characterized in that** the light source (8) in the marker (2) has an omnidirectional pattern in the horizontal plane.

6. A system for measuring lighting according to claim 1, **characterized in that** the light source (8) in the marker (2) has a directional characteristic in a vertical plane.

7. A system for measuring lighting according to claim 1, **characterized in that** the marker (2) has a battery or rechargeable battery power source (10).

8. A system for measuring lighting according to claim 1, **characterized in that** the marker (2) has a manual or automatic power switch (11), and the automatic switch (11) activates the marker (2) immediately when it is removed from the carrying box and deactivates it when the marker (2) is placed back in the carrying box.

9. A system for measuring lighting according to claim 1, **characterized in that** the housing (6) of the marker (2) is made of dark PVC, anodized aluminium or other material providing protection against adverse weather conditions.

10. A system for measuring lighting according to claim 1, **characterized in that** the marker positions (2) recorded in the image from the luminance meter (1) can be linked manually in the meter (1) software to define a measurement area.

11. A system for measuring lighting according to claim 1, **characterized in that** the points created by the markers (2) in the image from the luminance meter (1) can be connected automatically by the luminance meter (1) software to define a measurement area.
